# EUROPEAN PATENT SPECIFICATION

(11) **EP 1 968 902 B1**
(45) Date of publication and mention of the grant of the patent: **24.02.2010**
(21) Application number: 06700011.7
(22) Date of filing: 04.01.2006
(51) Int. Cl.: C02F 1/66

(54) **PROCESS FOR COMBATING WATER POLLUTED BY ALGAE**
VERFAHREN ZUR BEKÄMPFUNG VON ALGENVERSCHMUTZTEM WASSER
PROCESSUS POUR LUTTER CONTRE LA POLLUTION DE L'EAU PAR DES ALGUES

(43) Date of publication of application: 17.09.2008
(73) Proprietor: HSU, Kenneth J., Haslemere, Surrea GU27 3PT (GB)
(72) Inventor: HSU, Kenneth J., Haslemere, Surrea GU27 3PT (GB)
(74) Representative: Irniger, Ernst
(86) International application number: PCT/CH2006/000002
(87) International publication number: WO 2007/076614

(56) References cited:
- FR-A- 901 995
- PATENT ABSTRACTS OF JAPAN vol. 2000, no. 05, 14 September 2000 (2000-09-14) & JP 2000 051841 A (ATAKA CONSTRUCTION &ENGINEERING CO LTD), 22 February 2000 (2000-02-22)

## Description

The present invention relates to a process for combating pollution of water by algae by treating the polluted water with carbon dioxide to exterminate algae and suppressing their growth.

Algae growing preferentially in alkaline water can be exterminated and their growth suppressed if the water is acidized through the introduction and dissolution of carbon dioxide. This invention teaches the production of carbon dioxide from an environmentally friendly process of manufacturing magnesium to combate air and water pollution.

### Background of the Invention

In experiments on the shore of a polluted lake Dianchi in Yunnan Province, Yunnan, it was found that the polluting algae of the Dianchi water could all be exterminated after an acidization of the water by carbon dioxide. Subsequent experiments have verified that the extermination occurred when the pH value of the water is reduced to 5.8 or less. Dead algal remains can be filtered out when acidized polluted water by the new filtering system of aquitransistor/filter, and the filtered water is suitable as source of urban water supply. Experiments in Beijing have further indicated that the growth of green algae, blue-green algae and other polluting algae can be suppressed when the pH value of water is kept at 7.0 or below. Those discoveries and previous developments were patented to teach the use of carbon dioxide as algicide in environmental rehabilitation of polluted lakes and streams for urban water supply. The two
Patent applications are:
PCT/CH 03/00482: Use of Industrially Produced Carbon Dioxide for the Suppression of Algae and Rehabilitation of Polluted Lakes and PCT/CH 2004/00372: Aquitransistors for Integrated Hydrologic Circuit

The document JP 200005 1841 discloses a method for combating the pollution of water by algae. The carbonic acid absorption by algae is prevented by adding hydrochloric acid to the water.

### Field of the Invention

This invention teaches a process of combate pollution, which involves 1) a process of low-temperature production of carbon dioxide to be used for exterminating algae and to suppress their growth, 2) an application of using a by-product of this process to magnesium-manufacturing through which the carbon-dioxide emission to the air can be reduced, and 3) of developing an environmentally friendly technology to produce electric power for the manufacturing of metallic magnesium which has been rendered economically feasible through the sale of the by-product carbon dioxide produced during the manufacturing process.

### Low Temperature Production of Carbon Dioxide

A shortcoming of the previous developments of using carbon dioxide to combat water pollution is the difficulty of finding an adequate source of carbon dioxide as an algacide. There is need for cheaper carbon dioxide to be manufactured at low temperatures, and in limited quantities. This invention teaches that carbon dioxide produced by acidization of carbonate rocks or minerals is most suitable as algicide in exterminating polluting algae, and/or in suppressing their growth in small and large water bodies.

The operational cost of using carbon dioxide as an algacide to acidize large volumes of polluted waters would be prohibitively high if commercially available CO2 cylinders are used. Also there would be no supplementary benefit to reduce the industrially produced carbon-dioxide emission. In fact, the carbon dioxide from cylinders dissolved in polluted waters would equilibrate with the atmosphere, and a part would be released to air and thus added to the greenhouse effect of global warming. We have thus proposed that industrially produced carbon dioxide should be utilized as the source for the acidization or neutralization of polluted waters (PCT/CH 03/00482). Sources of industrially produced carbon dioxide could be the emissions produced by the burning of fossil fuels or that produced by the decarbonation of limestone to manufacture cement. Those emissions consist largely of carbon dioxide and vapor. Their dissolution in water would produce the carbonic acid needed to neutralize or acidize polluted waters. In a project to rehabilitate Dianchi for the water supply of Kunming, it was proposed that the kilns of the the Kunming Cement Plant be modified so that emissions from the Plant would be dissolved in the polluted lake, and not released to the air. Such a process of reducing carbon-dioxide emission would permit the Kunming factory to be given a higher production-quota and thus the profit could be increased. The emissions from the burning of fossil fuels or from decarbonation of limestones on kilns are, however, impure. Sulfuric and nitric acides, if not removed by costly processes, would add to the pollution when such impurities are also dissolved in water. Carbon dioxide has thus to be purified before it can be used to combate pollution, and the cost of purification of is very substantial. Furthermore, high temperature is required for the burning of fossil fuels or for the decarbonation of carbonate rocks. One additional problem of using carbon dioxide produced by industrial processes to combat pollution is the need in some instances of small quantities. One can hardly expect carbon dioxide produced by electricity plants or cement factories to be used as algicide for swimming pools or fish tanks, unless an elaborate and costly pipe-line system is built.

The present invention teaches the utilization of carbon dioxide produced in low temperature through the acidization of carbonate minerals or carbonate rocks. The reactions of acidifying carbonates by hydrochlorid acid can take place through the reactions at low temperature, as exemplified by

CaCO3 + HCl = CaCl2 + CO2 + H2O

MgCO3 + HCl = MgCl2 + CO2 + H2O

The reaction product is a mixture of magnesium chloride and carbonic acid, and the dehydration products are pure magnesium chloride and carbon dioxide. The reaction can occur in metal reactors of various sizes at room temperatures. Limestone or magnesite rock is broken and the rock fragments placed in metal container with teflon lining which serves as a chemical reactor. Hydrochloric acid is added at one end and carbon--dioxide gas is released at the other. The pressure inside the reactor can be regulated through an adjustment of the rate of addition of the acid, and that of the releasing the gas. Carbon dioxide is easily soluble in water to form the weak acide carbonic acid. Carbonate gas dissolved in water makes bubbling mineral water, and the consumption of weak dissolved carbon dioxide gas has no health impairment. To use carbonate dioxide produced by acidization of carbonate rocks, very pure limestone or magnesite should be obtained. The pure carbon dioxide can be stored in cylinders, or be piped directly into, and bubbled through the water of, fish tanks, swimming pools, ponds, lakes, canals, stream, or surface-water bodies of any size and shape to acidize the water to exterminate algae or to prevent algal-pollution.

Empirial evidence from Yunnan experiments indicated that to clean up Lake Dianchi to produce 1 million tons water daily or 1/3 billion tons water annually for Kunming, would require, at the rate of 2 kg CO2 per ton water, 600 million kg, or 600,000 tons of CO2 per year. The Dianchi water with pH values ranging up to 9 was reduced to less than 6, and the empirical rate was estimated in experiments to reduce the pH value by three units. The amount of dissolving carbon dioxide into alkaline waters to combate pollution is substantial. To suppress the algal growth in streams, ponds, swimming pools or fish tanks, the quantity of carbon dioxide required is small. The purpose is less to reduce carbon dioxide emission, but to maintain the cleanness of the water body. The growth of algae can be suppressed if the pH of water is maintained at 7, through the dissolution of carbon dioxide in water. The requirement is in the range of 10-100 grams carbon dioxide for one cubic-meter volume of water, depending the atmosphere-water interchange rate, and other factors. A very rough estimate suggests that a weekly supply of 10-100 kg carbon dioxide could prevent algal growth in an Olympic-sized swimming pool. Since the main expenditure will be acidization, which is about 30$ per ton, the cost of maintaining algae-free swimming pool should be less than a few dollars per week. Very small metal containers for acidization of magnesite to produce carbon dioxide can be attached to fish tanks. The occasional bubbling of carbon dioxide to neutralize the alkalinity of water would not only be functional, but also fascinating to children owning the pet fish, and to their mother would not have to slave every month to clean up the algal pollution. Where medium or small quantifies of carbon dioxide are required, we recommend the use of carbon dioxide produced by the acidization of carbonates. The by-product CaCl2 is useful, but has little commercial value. The installations to produce carbon dioxide at low temperatures are not costly, the by-product CaCl2 is useful, but it has little commercial value.

Use of Carbon Dioxide Emission Produced in Manufacturing Magnesium. Magnesium is very much in demand as alloys for the manufacturing of airplanes, automobiles, etc. Metallic magnesium is commonly produced by a process of electrolysis of magnesium chloride. The compound could be obtained by the evaporation of seawater or of brines in salt lakes. The Dead Sea, for example, supplies the brine which provides the magnesium needed for the manufactures of Volkswagen automobiles. However, very pure magnesium chloride is needed to manufacture metallic magnesium by electrolysis, and the magnesium chloride produced by evaporation is impure. Purification of evaporative magnesium chloride can be very costly. An alternative source to obtain pure magnesium chloride is to acidize pure magnesite rock. Very pure magnesite rock is very common and cheap. The acidization of magnesite costs, in many instances, less than that of purifying magnesium chloride by chemical method. Numerous magnesium-producers elects the acidization method to produce pure magnesium chloride. Carbon dioxide is a waste product and is released to the atmosphere as pollutant to produce the adverse greenhouse effect of causing global warming. In developed countries which have signed the Kyoto Agreement, assessment of carbon-dioxide emission tax would add additional cost to manufacturing.

The present invention teaches that the carbon dioxide produced during the acidization of magnesite in manufacturing could be used as the source of making weak carbonic acid to combate the pollution of algae-infested lakes, streams, canals, and other surface water bodies. Carbon dioxide produced through the acidization of magnesite is preferable not only because of its convenience, but because of its benefit of reducing the industrially produced carbon dioxide to combate global warming, and because of its economic value. The by-product magnesium chloride could be sold to magnesium-manufacturing factories for 120 US$ per ton or more, and at the same reducing their payment of carbon-dioxide tax. Large amount of carbon dioxide produced by the magnesium-manufacturing process can be utilized for the rehabilitation of lakes, such as Dianchi and Tai-Hu Lakes in China, Biwa Lake of Japan, etc. Where the algae are to be massively exterminated, the dead remains have to be filtered out through the use of aquitransistor/filter (PCT/CH 2004/00372). Large amount can also be utilized to acidize alkaline lakes of arid regions. Magnesium-manufacturing factories can be built on the shores of the Lake Magadi in Kenya, Lake Urmia in Iran, or other alkaline lakes to produce carbon dioxide for the neutralization of those highly alkaline lakes. Such shiff of magnesium manufacturing factories would not only help the economy, also the beneficial effect of combate global warming.
Neutralized portions of the alkaline lakes may have also an ecology beneficial to aquatic life and to fishing industry.

Construction of Environmentally Friendly Source of Recycled Energy Electrolysis consumes electric energy. Large factories of manufacturing magnesium by electrolysis requires a stupendous supply of electric energy. Electricity generated by fossil fuels are costly and environmentally unfriendly, factories producing magnesium through electrolysis depends, in numerous instances, on hydroelectricity as its energy source.
The current practice of generating hydroelectricity requires the construction of high dams. A vast quantity of water has to be supplied at a high rate to move turbine generators, and the rate can only be achieved if water is withdrawn from surface reservoirs. The invention of aquitransistor/filters promises to liberate us from this dependence of high dams for hydro-electricity generation (PCT/CH 2004/00372: Aquitransistors for Integrated Hydrologic Circuit). Water from sediment-laden streams, such as Yellow River flowing through high valleys, can be filtered rapidly to provide water-flow at high rate for hydroelectricity. Water can also be withdrawn rapidly and filtered rapidly from the pore space (40%) of the sediments in the reservoirs behind high dams. The electric energy required for the pumping in an integrated hydrologic circuit is much less (10% or less) than that produced by the hydroelectricity generation.
We recommend the construction of IHC systems near magnesium-manufacturing plants on the shores of alkali lakes to generate hydro-electricty for a manufacturing process which could produce carbon dioxide needed to combate water pollution and to have a net effect of reducing carbon-dioxide emissions to the atmosphere.

## Claims

1. A process for combating pollution of water by algae by treating the polluted water with carbon dioxide to exterminate algae and suppressing their growth, wherein the carbon dioxide used is produced by a chemical reaction using hydrochloric acid to acidize a carbonate rock or mineral.

2. A Process according to Claim 1 wherein the carbon dioxide is produced by using magnesite as the carbonate rock or mineral, thereby producing as additional product magnesium chloride.

3. A Process according to Claim 2 wherein the magnesium chloride produced is used as the source material for the production of metallic magnesium through electrolysis.

4. A Process according to Claim 1, wherein the carbon dioxide produced is used to neutralize alkaline lakes to result in a net reduction of global carbon-dioxide emission to the atmosphere.

5. A Process according to Claim 1, wherein carbon dioxide produced is used to exterminate polluting algae in lakes, canals, streams, reservoirs, or other surface water bodies, so that those polluted waters can again be filtered to become source of water-supply for urban and rural uses.

6. A Process according to Claim 1, wherein the carbon dioxide produced is used to suppress the algal growth in ponds, lakes, canals, streams, reservoirs, or other surface water bodies.

7. A Process according to Claim 1, wherein the carbon dioxide produced is used to prevent or suppress the algal growth in fish tanks, aquarium displays, or in other installations, so that they could remain clean and that their maintenance costs be minimized.

8. A Process according to claim 2, **characterized in that** water from sediment-laden streams such as rivers, flowing in high valleys or ground water is used for moving turbines in generating hydroelectricity to provide the power source to manufacture metallic magnesium involving the process according to claim 2.

## Patentansprüche

1. Verfahren für die Bekämpfung der Wasserverschmutzung durch Algen durch behandeln des verschmutzten Wassers mittels Kohlendioxid, um Algen abzutöten und deren Wachstum zu unterdrücken, wobei das verwendete Kohlendioxid hergestellt wird mittels einer chemischen Reaktion unter Verwendung von Salzsäure, um ein Karbonatgestein oder -mineral zu säuern.

2. Verwendung nach Anspruch 1, wobei Kohlendioxid hergestellt wird unter Verwendung von Magnesit als Karbonatgestein oder -mineral, wobei als zusätzliches Produkt Magnesiumchlorid hergestellt wird.

3. Verfahren nach Anspruch 2, wobei das hergestellte Magnesiumchlorid verwendet wird als Ausgangsmaterial für die Herstellung von metallischem Magnesium mittels Elektrolyse.

4. Verfahren nach Anspruch 1, wobei das hergestellte Kohlendioxid verwendet wird, um alkalische Seen zu neutralisieren mit dem Resultat in einer Netto-Reduktion der globalen Kohlendioxid-Emission in die Atmosphäre.

5. Verfahren nach Anspruch 1, wobei das hergestellte Kohlendioxid verwendet wird, um verunreinigende Algen in Seen, Kanälen, Flüssen, Reservoirs oder anderen Oberflächengewässern abzutöten, sodass diese verunreinigten Gewässer wiederum filtriert werden, um Bezugsquelle für Wasserspeisung von kommunalem und landwirtschaftlichem Gebrauch zu werden.

6. Verfahren nach Anspruch 1, wobei das hergestellte Kohlendioxid verwendet wird, um Algenwachstum in Weihern, Seen, Kanälen, Flüssen, Reservoirs oder anderen Oberflächengewässern zu verhindern.

7. Verfahren nach Anspruch 1, wobei das hergestellte Kohlendioxid verwendet wird, um Algenwachstum in Fischbecken, Aquarien oder in anderen Installationen zu verhindern oder zu unterdrücken, sodass diese sauber bleiben und deren Unterhaltskosten minimiert werden.

8. Verfahren nach Anspruch 2, **dadurch gekennzeichnet, dass** Wasser von sedimentbeladenen Strömen wie Flüssen, Fliessgewässern in Hochtälern oder Grundwasser verwendet werden für das Betreiben von Turbinen in Hydroelektrizität-Erzeugung um die Energiequelle bereitzustellen für die Herstellung von metallischem Magnesium unter Verwendung des Verfahrens nach Anspruch 2.

## Revendications

1. Processus pour lutter contre la pollution de l'eau par des algues par traiter l'eau polluée avec dioxyde de carbone pour éradiquer les algues et supprimer leur développement, le dioxyde carbone étant produit par une réaction chimique en utilisant acide chlorhydrique pour acidifier un rocher de carbonate ou un minéral.

2. Processus selon la revendication 1, le dioxyde carbone étant produit en utilisant magnésite comme rocher de carbonate ou minéral, par cela produisant magnésium chlorure comme produit additionnel.

3. Processus selon la revendication 2, le magnésium chlorure étant utilisé comme la source de matériel pour la production du magnésium métallique par électrolyse.

4. Processus selon la revendication 1, le dioxyde carbone étant produit pour neutraliser des lacs alcalins pour résulter dans une réduction net de l'émission de dioxyde de carbone globale à l'atmosphère.

5. Processus selon la revendication 1, le dioxyde carbone produit étant utilisé pour éradiquer les algues polluant des lacs, des canaux, des cours d'eau, des réservoirs, ou d'autres éléments d'eau, de sorte que les eaux polluées peuvent être filtrées de nouveau afin d'être source d'alimentation d'eau aux fins urbaines et rurales.

6. Processus selon la revendication 1, le dioxyde carbone produit étant utilisé pour supprimer le développement des algues dans des bassins, les lacs, les canaux, les cours d'eau, les réservoirs, ou d'autres surfaces d'éléments d'eau.

7. Processus selon la revendication 1, le dioxyde carbone produit étant utilisé pour prévenir ou supprimer le développement des algues dans des bassins à poisson, des vitrines d'aquarium, ou dans d'autres installations, afin qu'ils restent propres et que leur frais d'entretien sont minimisés.

8. Processus selon la revendication 2, **caractérisé en ce que** l'eau des fleuves chargée avec du sédiment, coulant dans des vallées hautes ou eau souterraine étant utilisée pour mouvoir des turbines en générer de hydro-électricité pour prévoir la source d'énergie pour la fabrication du magnésium métallique incorporant le processus selon la revendication de la revendication 2.
